# EUROPÄISCHE PATENTSCHRIFT

(11) **EP 2 158 477 B1**
(45) Veröffentlichungstag und Bekanntmachung des Hinweises auf die Patenterteilung: **15.06.2011**
(21) Anmeldenummer: 08735391.8
(22) Anmeldetag: 25.04.2008
(51) Int. Cl.: G01N 27/74, G01N 33/00

(54) **PARAMAGNETISCHE SAUERSTOFFMESSZELLE**
PARAMAGNETIC OXYGEN MEASUREMENT CELL
CELLULE DE MESURE D'OXYGÈNE PARAMAGNÉTIQUE

(30) Priorität: 19.06.2007 DE 102007028145
(43) Veröffentlichungstag der Anmeldung: 03.03.2010
(73) Patentinhaber: M & C TechGroup Germany GmbH, 40885 Ratingen (DE)
(72) Erfinder: RUMM, Hans-Jörg, 46145 Oberhausen (DE)
(74) Vertreter: Berkenbrink, Kai-Oliver
(86) Internationale Anmeldenummer: PCT/EP2008/003344
(87) Internationale Veröffentlichungsnummer: WO 2008/154981

(56) Entgegenhaltungen:
- DE-A1- 19 803 990
- US-A- 3 026 472
- US-A- 3 487 297
- US-A- 3 994 588

## Beschreibung

Die Erfindung betrifft eine Sauerstoffmesszelle zur paramagnetischen Sauerstoffbestimmung, also zur Messung des Sauerstoffanteils in einem Gas.

Zur Messung des Sauerstoffanteils in einem Gas wird dabei die unterschiedliche magnetische Suszeptibilität von Sauerstoff und Stickstoff ausgenutzt. Sauerstoff hat eine Suszeptibilität > 0 und ist damit paramagnetisch. Aufgrund dieser paramagnetischer Eigenschaft richten sich die Sauerstoffmoleküle in einem Magnetfeld aus und verstärken damit das Magnetfeld. Stickstoff hingegen hat eine Suszeptibilität < 0, womit es sich bei Stickstoff um einen diamagnetischen Stoff handelt. Stickstoff hat somit die Tendenz, aus einem Magnetfeld herauszuwandern und strebt in einem Magnetfeld damit in Richtung der niedrigeren Feldstärke.

Um diese unterschiedliche Suszeptibilität von Sauerstoff und Stickstoff zur Messung des Sauerstoffanteils in einem Gas auszunutzen, wird in einer Messkammer einer Sauerstoffmesszelle der vorgenannten Art ein ungleichförmiges Magnetfeld erzeugt. Wird nunmehr Sauerstoff enthaltendes Gas durch die Messkammer geleitet, wird das Magnetfeld durch den Sauerstoff verstärkt. Ein in der Messkammer drehbar angeordnetes Drehteil mit stickstoffgefüllten Gasballons strebt daraufhin verstärkt in Richtung der niedrigeren Feldstärke des ungleichförmigen Magnetfeldes. Das Drehteil wird dadurch aus seiner Nullstellung ausgelenkt. Das auf diese Weise erzeugte Drehmoment ist dem Sauerstoffgehalt des durch die Messkammer strömenden, zu analysierenden Gases direkt proportional.

Es ist bekannt, das durch den Sauerstoffanteil erzeugte Drehmoment des Drehteils durch das Magnetfeld einer Leiterschleife zu kompensieren, die geeignet in der Messkammer angeordnet ist und von einem elektrischen Strom durchflossen wird. Bei einer bestimmten Stromstärke wird das durch den Sauerstoffanteil des zu analysierenden Gases hervorgerufene Drehmoment genau kompensiert und das Drehteil befindet sich wieder in seiner Nullstellung. Damit ist der durch die Leiterschleife fließende Kompensationsstrom beziehungsweise die an die Leiterschleife angelegte Spannung ein Maß für das vom Sauerstoffgehalt des zu analysierenden Gases hervorgerufene Drehmoment und damit ein Maß für den Sauerstoffgehalt des Gases.

Die Nullstellung beziehungsweise Ausgangsstellung des Drehteils wird mit Hilfe eines Photosensors kontrolliert. Dazu wird ein Lichtstrahl erzeugt und von außen in die Messkammer geleitet. Von einem in der Mitte des Drehteils angebrachten kleinen Spiegel wird der Lichtstrahl reflektiert und wieder nach außen geleitet. Der Photosensor ist derart angeordnet, dass der reflektierte Lichtstrahl auf diesen leitbar ist. Die Nullstellung des Drehteils ist hierdurch mittels des Photosensors überprüfbar beziehungsweise bestimmbar.

Eine solche Sauerstoffmesszelle ist beispielsweise aus DE 36 33 750 C2 oder US 3,994,588 bekannt. In der Vorrichtung gemäß US 3,026,472 wird der Lichtstrahl von einem Prisma reflektiert, dadurch in zwei Teilstrahlen aufgespalten und auf zwei Photosensoren reflektiert.

Grundsätzlich, haben sich entsprechend gestaltete Sauerstoffmesszellen bewährt. Sie zeichnen sich durch eine hohe Messgenauigkeit bei gleichzeitiger guter Robustheit aus.

Dennoch sind gelegentliche Fehlfunktionen der Stauerstoffmesszelle nicht auszuschließen. So kann es beispielsweise zu einer Klemmung des Drehteils kommen.

Trotz einer solchen Fehlfunktion kann es dazu kommen, dass der Photosensor ein Lichtsignal empfängt, beispielsweise durch eine Reflektion des Lichtstrahls an einer anderen Komponente der Sauerstoffmesszelle als dem Spiegel. Dabei kann es dazu kommen, dass der Photosensor ein solches Lichtsignal empfängt, wonach sich das Drehteil scheinbar in der Nullstellung befindet, obwohl es in Wirklichkeit in einer verdrehten Stellung festklemmt. Ob eine solche Fehlfunktion vorliegt, ist bei den bisherigen Sauerstoffmesszellen häufig nur schwer feststellbar, insbesondere bei laufendem Betrieb der Sauerstoffmesszelle.

Der Erfindung liegt die Aufgabe zugrunde, eine Sauerstoffmesszelle der eingangs genannten Art zur Verfügung zu stellen, bei der eine Fehlfunktion erfassbar ist, insbesondere auch bei laufendem Betrieb der Sauerstoffmesszelle.

Zur Lösung dieser Aufgabe wird erfindungsgemäß zur Verfügung gestellt eine Sauerstoffmesszelle gemäss Anspruch 1.

Die Grundidee der Erfindung beruht darauf, neben dem aus dem Stand der Technik bereits bekannten ersten Photosensor einen weiteren Photosensor vorzusehen, auf den der Lichtstrahl ebenfalls über den Spiegel reflektierbar ist. Dabei dient der weitere Photosensor im Gegensatz zu dem ersten Photosensor nicht zur Bestimmung der Nullstellung des Drehteils, sondern allein zur Überwachung der Funktionstüchtigkeit der Sauerstoffmesszelle.

Eine Grundüberlegung der Erfindung beruht darauf, dass eine Fehlfunktion der Sauerstoffmesszelle dadurch indiziert ist, dass der durch den Spiegel reflektierte Lichtstrahl in der Nullstellung des Drehteils nicht auf den weiteren Photosensor trifft.

Dadurch ist durch den weiteren Photosensor die Funktionstüchtigkeit der Sauerstoffmesszelle mittels der von dem weiteren Photosensor empfangenen Lichtsignale überwachbar. Insbesondere ist die Funktionstüchtigkeit der Sauerstoffmesszelle auch bei laufendem Betrieb überwachbar. Die erfindungsgemäße Sauerstoffmesszelle muss daher zur Überwachung ihrer Funktionstüchtigkeit nicht ihre Messtätigkeit einstellen oder gar geöffnet werden.

Die Art und Weise der Überwachung der Funktionstüchtigkeit der Sauerstoffmesszelle mittels des weiteren Photosensors ist grundsätzlich beliebig.

Zur Überwachung der Funktionstüchtigkeit der Sauerstoffmesszelle kann diese beispielsweise eine Überwachungseinrichtung zur Überwachung der von dem weiteren Photosensor empfangenen Lichtsignale aufweisen. Im einfachsten Fall kann diese Überwachungseinrichtung beispielsweise ein einfacher Signalgeber sein, beispielsweise ein optischer Signalgeber, wie beispielsweise ein Lampe oder eine Diode, oder ein akustischer Signalgaber. Diese Signalgeber geben in Abhängigkeit der von den an dem weiteren Photosensor empfangenen Lichtsignale entsprechende Signale ab, anhand derer die Funktionstüchtigkeit der Sauerstoffmesszelle überwachbar ist.

Die Überwachungseinrichtung kann eine Messeinrichtung zur Messung der von dem weiteren Photosensor empfangenen Lichtsignale aufweisen. Hierdurch sind beispielsweise gezielt Stärke und/oder Stärke und Dauer und/oder Stärke und Zeitpunkt der von dem weiteren Photosensor empfangenen Lichtsignale messbar beziehungsweise überwachbar. In Abhängigkeit der entsprechend gemessenen Signale ist die Funktionstüchtigkeit der Sauerstoffmesszelle überwachbar.

Die Überwachungseinrichtung kann bevorzugt derart eingerichtet sein, dass durch sie gezielt überwachbar ist, ob die von dem weiteren Photosensor empfangenen Lichtsignale eine bestimmte (definierbare) Stärke, beispielsweise für eine bestimmte (definierbare) Dauer oder an einem bestimmten (definierbaren) Zeitpunkt, erreichen oder nicht.

Durch den weiteren Photosensor ist damit auf einfache Weise die Möglichkeit geschaffen, die Funktionstüchtigkeit der Sauerstoffmesszelle zuverlässig zu überwachen.

Die Sauerstoffmesszelle weist die Einrichtung zur Erzeugung eines Fehlersignals in Abhängigkeit der von dem weiteren Photosensor empfangenen Lichtsignale beispielsweise zur Darstellung der von dem weiteren Photosensor empfangenen Lichtsignale auf. Diese Einrichtung zur Erzeugung eines Fehlersignals kann an die Überwachungseinrichtung gekoppelt sein, wobei die Überwachungseinrichtung, wie zuvor dargestellt, zum Empfang und gegebenenfalls zur Messung sowie zum Weiterleiten der Lichtsignale des weiteren Photosensors an die Einrichtung zur Erzeugung eines Fehlersignals eingerichtet ist.

Die Sauerstoffmesszelle weist eine Einrichtung zur Erzeugung eines Fehlersignals in Abhängigkeit der von dem weiteren Photosensor empfangenen Lichtsignale auf. Beispielsweise weist die Sauerstoffmesszelle eine Einrichtung zur Erzeugung eines Fehlersignals in Abhängigkeit der von dem weiteren Photosensor empfangenen Stärke der Lichtsignale oder in Abhängigkeit der von dem weiteren Photosensor empfangenen Stärke und Dauer der Lichtsignale auf oder in Abhängigkeit der von dem weiteren Photosensor empfangenen Stärke und des Zeitpunkts der Lichtsignale auf. Die Einrichtung zur Erzeugung eines Fehlersignals ist demnach beispielsweise derart eingerichtet, dass sie ein Fehlersignal erzeugt, wenn der weitere Photosensor für eine bestimmte Dauer kein Lichtsignal einer bestimmten Stärke empfängt. Diese Dauer kann insbesondere beispielsweise in Abhängigkeit von der Dauer bestimmt sein, für die das Drehteil im Regelbetrieb der Sauerstoffmesszelle längstens aus der Nullstellung ausgelenkt ist, also für die Dauer zwischen dem Beginn der Auslenkung des Drehteils nach Einleitung von Sauerstoff enthaltendem Gas in die Messkammer und der vollständigen Rückdrehung des Drehteils in die Nullstellung, also insbesondere bei Anliegen des Kompensationsstroms an der Leiterschleife. Dabei kann die Dauer in der Einrichtung zur Erzeugung eines Fehlersignals derart bestimmt sein, dass sie ein wenig über dieser längsten Dauer der Auslenkung des Drehteils liegt. Die oben genannte Lichtstärke kann insbesondere beispielsweise in Abhängigkeit von der Lichtstärke bestimmt sein, die der weitere Photosensor im Regelbetrieb empfängt, also der bei Nullstellung des Drehteils vom weiteren Photosensor empfangenen Lichtstärke. Beispielsweise kann diese Lichtstärke bestimmt sein als die Lichtstärke, die der weitere Photosensor in der Nullstellung des Drehteils empfängt.

Bei dem von der Einrichtung zur Erzeugung eines Fehlersignals erzeugbaren Fehlersignal kann es sich beispielsweise um ein optisches, akustisches oder elektronisches Signal oder eine Kombination dieser Signale handeln, durch welche eine Fehlfunktion der Sauerstoffmesszelle angezeigt wird.

Grundsätzlich kann es sich bei dem weiteren Photosensor um einen beliebigen Sensor zum Empfang von Lichtsignalen handeln, beispielsweise um wenigstens einen Photowiderstand, wenigstens eine Photodiode, wenigstens einen Phototransistor oder eine Kombination solcher Photosensoren. Besonders bevorzugt handelt es sich bei dem Photosensor um wenigstens eine Photozelle oder eine Kombination wenigstens einer Photozelle mit wenigstens einer der vorgenannten Photosensoren.

Wie zuvor dargestellt, beruht eine Grundüberlegung der Erfindung darauf, dass eine Fehlfunktion der Sauerstoffmesszelle dadurch indiziert ist, dass der durch den Spiegel reflektierte Lichtstrahl in der Nullstellung des Drehteils nicht auf den weiteren Photosensor trifft. Zur Sicherstellung, dass der erste Photosensor und der weitere Photosensor den gleichen reflektierten Lichtstrahl empfangen, ist nach einer bevorzugten Ausführungsform der Erfindung vorgesehen, dass der erste Photosensor und der weitere Photosensor unmittelbar benachbart zueinander angeordnet sind. Dabei können der erste Photosensor und der weitere Photosensor derart angeordnet sein, dass beide Photosensoren in der Nullstellung des Drehteils jeweils einen Teil des Lichtkegels des von dem Spiegel reflektierten Lichtstrahles empfangen. Durch die inmittelbar benachbarte Anordnung ist auch eine äußerst kompakte Bauweise möglich. Gleichzeitig ist durch eine unmittelbar benachbarte Anordnung von erstem und weiterem Photosensor sichergestellt, dass sie bei korrekter Funktion der Sauerstoffmesszelle und in Nullstellung des Drehteils mittels nur eines Spiegels den gleichen von diesem reflektierten Lichtstrahl empfangen können.

Nach einer Fortführung dieses Erfindungsgedankens ist der weitere Photosensor inmitten des ersten Photosensors angeordnet.

Nach einer weiteren Ausführungsform besteht der erste Photosensor aus wenigstens zwei Einzelsensoren, beispielsweise zwei Photozellen, die um den weiteren Photosensor herum angeordnet sind, beispielsweise auf beiden Seiten des Photosensors angeordnet sind.

Der erste Photosensor und der weitere Photosensor können beispielsweise eine Baueinheit bilden.

Nach einer Ausführungsform ist der erste Photosensor als Differentialphotozelle ausgebildet. Die Differentialphotozelle setzt sich aus zwei mit Abstand zueinander angeordneten Photozellen zusammen. In der Nullstellung des Drehteils fällt der vom Spiegel reflektierte Lichtstrahl in den Raum zwischen den beiden Photozellen. Die Nullstellung wird entsprechend dadurch bestimmt, dass die Photozellen kein Lichtsignal empfangen.

Erfindungsgemäß ist nach einer bevorzugten Ausführungsform vorgesehen, dass der weitere Photosensor in dem Raum zwischen den beiden Photozellen der Differentialphotozelle angeordnet ist. Dies ermöglicht eine besonders kompakte und einfache Bauweise, da dieser Raum, an dem der weitere Photosensor bei dieser Ausführungsform angeordnet wird, "ohnehin" bereits vorhanden ist.

Bei einem Verfahren zur Überwachung der Funktionstüchtigkeit der erfindungsgemäßen Sauerstoffmesszelle werden die an dem weiteren Photosensor empfangenen Lichtsignale zur Überwachung der Funktionstüchtigkeit der Sauerstoffmesszelle überwacht.

Wie hierin ausgeführt, können die an dem weiteren Photosensor empfangenen Lichtsignale insbesondere hinsichtlich Stärke und Dauer oder hinsichtlich Stärke und Zeitpunkt überwacht werden.

Dabei kann, wie ausgeführt, beispielsweise in Abhängigkeit von Stärke und Dauer oder von Stärke und Zeitpunkt der an dem weiteren Photosensor empfangenen Lichtsignale ein Fehlersignal erzeugt werden. Insbesondere kann ein solches Fehlersignal erzeugt werden, wenn der weitere Photosensor für eine bestimmte Dauer oder zu einem bestimmten Zeitpunkt kein Lichtsignal einer bestimmten Stärke empfängt.

In ihrem Grundaufbau kann die erfindungsgemäße Sauerstoffmesszelle wie aus dem Stand der Technik bekannt aufgebaut sein, beispielsweise wie die Sauerstoffmesszelle gemäß DE 36 33 750 C2.

Die Sauerstoffmesszelle kann beispielsweise einen Deckel und einen Boden aufweisen, zwischen denen die Messkammer angeordnet ist. Der Deckel kann beispielsweise einen Gaseinlass und der Boden einen Gasauslass für das der Messkammer zuzuführende, zu analysierende Gas aufweisen. Deckel und Boden können jeweils aus Metall gefertigt sein.

Die Messkammer mit kann beispielsweise zylinderförmig gestaltet sein. Bevorzugt besteht die Messkammer aus einem lichtdurchlässigen Material, beispielsweise Glas. Gegen den Deckel und den Boden kann die Messkammer abgedichtet sein, wie zum Beispiel durch elastische Dichtungsmittel, beispielsweise Dichtungsringe.

Das Drehteil kann beispielsweise zwei ballonförmige, stickstoffgefüllte Hohlkörper aufweisen, beispielsweise Glashohlkörper. Die Hohlkörper können beispielsweise durch ein stabförmiges Verbindungsteil, bevorzugt aus Metall, besonders bevorzugt aus einem magnetisierbaren Metall miteinander verbunden sein.

Der an dem Drehteil angeordnete Spiegel kann beispielsweise mittig zwischen den Hohlkörpern am Verbindungsteil angeordnet sein, beispielsweise an der Verbindungsstelle des Verbindungsteils mit einem Torsionsteil, an dem das Drehteil drehbar angeordnet ist.

Bei der Einrichtung zur Erzeugung eines ungleichförmigen Magnetfeldes im Bereich des Drehteils kann es sich bevorzugt um einen Magneten, bevorzugt um einen Elektromagneten handeln.

Bei dem Lichtsender zur Erzeugung eines Lichtstrahls kann es sich bevorzugt um eine Diode, aber beispielsweise auch um eine Lampe handeln. Die Strahlung des Lichtsenders kann mittels optischer Einrichtungen, beispielsweise Linsen, zu einem Lichtstrahl bündelbar sein.

Das Drehteil kann, wie aus dem Stand der Technik bekannt, drehbar an einem um seine Längsachse tordierbaren Torsionsteil angeordnet ist, wobei die Längsachse des Torsionsteils senkrecht zur Längsachse des Verbindungsstabes verläuft und mittig zwischen den Hohlkörpern des Drehteils mit dem Verbindungsteil verbunden ist. Bei dem Torsionsteil handelt es sich bevorzugt um ein gespanntes Seil, einen gespannten Draht oder ein Torsionsband, bevorzugt einen gespannten Metalldraht oder ein gespanntes Torsionsband, welcher beziehungsweise welches um seine Längsachse tordierbar ist.

In der Messkammer kann ferner eine von einem elektrischen Strom durchfließbare Leiterschleife angeordnet sein, durch die ein Drehmoment auf das Drehteil ausübbar ist. Insbesondere kann die Leiterschleife derart von elektrischem Strom durchfließbar sein, dass ein derartiges Drehmoment auf das Drehteil ausübbar ist, dass die durch Sauerstoffgas ausgeübte Auslenkung des Drehteils durch die Leiterschleife kompensierbar und das Drehteil wieder in seine Nullstellung rückdrehbar ist. Die Leiterschleife kann an ein Strommessinstrument zur Messung des durch die Leiterschleife fließenden Stroms gekoppelt sein.

Weitere Merkmale der Erfindung ergeben sich aus den Figuren und den Unteransprüchen.

Ein Ausführungsbeispiel der erfindungsgemäßen Sauerstoffmesszelle soll anhand der nachfolgenden Figurenbeschreibung näher erläutert werden.

Dabei zeigt
- Fig. 1: eine Seitenansicht einer erfindungsgemäßen Sauerstoffmesszelle mit Gehäuse;
- Fig. 2: eine Vorderansicht der Sauerstoffmesszelle nach Figur 1 und
- Fig. 3: eine Schnittansicht entlang der Schnittlinie A-A gemäß Figur 2.

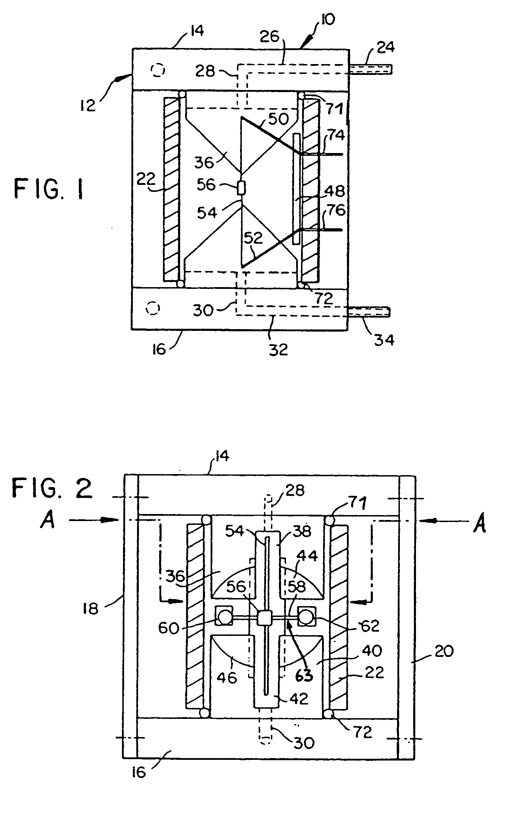

Die in den Figuren 1 bis 3 dargestellte Messzelle 10 weist ein Gehäuse 12 mit einem Deckel 14, einem Boden 16 und zwei Seitenwänden 18 und 20 auf. Nach vorne und hinten ist das Gehäuse 12 offen.

Zu analysierendes Gas wird über einen Gaseinlassstutzen 24 zugeführt, der am Deckel 14 angebracht ist, sich im Inneren des Deckels 14 in einer Einlassleitung 26 fortsetzt und die senkrecht nach unten in einen Gaseinlass 28 mündet. Dem Gaseinlass 28 gegenüberliegend ist im Boden 16 des Gehäuses 12 ein Gasauslass 30 angeordnet, der mit einer Auslassleitung 33 verbunden ist, die wiederum an einen Gasauslassstutzen 34 angeschlossen ist. Der Gaseinlass 28 und der Gasauslass 30 erstrecken sich in Richtung der Längsachse einer Messkammer 22 und konzentrisch zu dieser Längsachse. Die Messkammer 22 ist als Hohlzylinder aus Glas ausgebildet und an ihren beiden Enden offen.

In der Messkammer 22 sind ein oberes Polstück 36 mit einer Aussparung 38 und ein gegenüberliegendes unteres Polstück 40 mit einer der oberen Aussparung 38 gegenüberliegenden Aussparung 42 angeordnet. Das obere Polstück 36 ist mit einer oberen Schrägfläche 44 versehen und entsprechend das untere Polstück 40 mit einer unteren Schrägfläche 46. Die Schrägflächen 44, 46 liegen einander gegenüber. Zwischen den Endkanten der Schrägflächen 44, 46 ist ein inhomogenes Magnetfeld erzeugbar, aufgrund außen angebrachter Magnete, die auf die aus Weicheisen bestehende Polstücke 36, 40 einwirken.

An einem Abschnitt der Innenwand der Messkammer 22 ist eine längliche Halteplatte 48 angeordnet. Von der Halteplatte 48 springen ins Innere der Messkammer 22 je ein oberer Tragarm 50 und ein unterer Tragarm 52. Die Tragarme 50, 52 reichen jeweils von der Halteplatte 48 bis zur zentralen Längsachse der Messkammer 22. Zwischen den Enden der Tragarme 50, 52 ist ein Torsionsteil in Form eines Torsionsbandes 54 aus einer Platin-Rhodium-Legierung gespannt.

Wie besonders aus Figur 2 deutlich wird, ist in der Mitte des Torsionsbandes 54 ein stabförmiges Verbindungsteil 58 mittig befestigt, an dessen Enden je ein Hohlkörper in Form eines Gasballons 60, 62 angeordnet ist. Die Gasballons 60, 62 sind mit Stickstoff gefüllt und hermetisch abgedichtet.

Weiterhin ist an der Verbindungsstelle zwischen Verbindungsstab 58 und

Torsionsband 54 ein Spiegel 56 angeordnet.

Das Verbindungsteil 58 sowie die Gasballons 60, 62 bilden das Drehteil 63.

Der die Messkammer bildende Glaszylinder 22 ist, wie besonders aus Figur 1 und 2 hervorgeht, endseitig gegen den Deckel 14 des Gehäuses 12 über einen elastischen O-Ring 71 und am gegenüberliegenden Ende gegen den Boden 16 des Gehäuses 12 über einen entsprechenden O-Ring 72 abgedichtet.

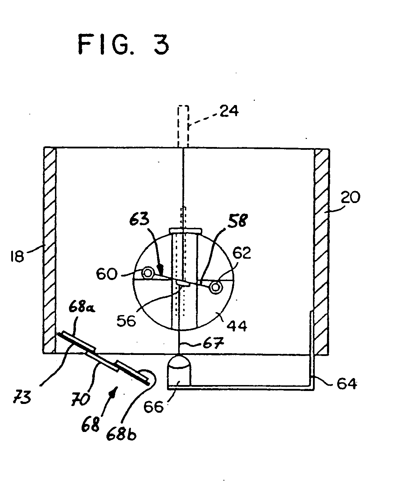

Die Anordnung der Messzelle 22 und deren Funktion werden besonders aus der Aufsicht auf einen Horizontalschnitt der Messzelle gemäß Figur 3 deutlich. Das Drehteil 63 mit den beiden jeweils an den Enden des Verbindungsteils 58 angeordneten Gasballonen 60, 62 trägt in der Mitte des Verbindungsteils 58 den Spiegel 56, auf den ein Lichtstrahl 67 fällt, der von einer Lampe 66 ausgesandt wird, die über einen Halter 64 an der Seitenwand 20 des Gehäuses 12 befestigt ist. Der Lichtstrahl 67 wird am Spiegel 56 reflektiert und, je nach Verdrillung des Torsionsbandes 54 (vergleiche Figur 2), in einem bestimmten Winkel zur Richtung Lampe-Torsionsband wieder nach außen geschickt. Der reflektierte Lichtstrahl gelangt über die Wand der Messkammer 22 wieder nach außen und kann dort mit Hilfe eines als Photozelle 68 ausgebildeten ersten Photosensors registriert werden. Die Justierung der Nullstellung des Spiegels 56 beziehungsweise des Drehteils 63 kann einfach durch Verdrehen des Glaszylinders 22 erfolgen.

Die Photozelle 68 ist, wie in Figur 3 angedeutet, als Differentialphotozelle ausgebildet, enthält also eine (linke) Photozelle 68a und (rechte) Photozelle 68b.

Der Raum zwischen der Photozelle 68a und der Photozelle 68b wird von einem als Photozelle 70 ausgebildeten weiteren Photosensor eingenommen. Dieser weitere Photosensor 70 beziehungsweise die weitere Photozelle 70 dient zur Überwachung der Funktionstüchtigkeit der Sauerstoffmesszelle 10. Die Photozelle 70 ist an eine Einrichtung zur Erzeugung eines Fehlersignals (nicht dargestellt) angeschlossen, die zur Erzeugung von Fehlersignalen in Abhängigkeit von den an der weiteren Photozelle 70 empfangenen Lichtsignalen ausgebildet ist. Dabei ist die Einrichtung zur Erzeugung eines Fehlersignals derart eingerichtet, dass sie ein Fehlersignal erzeugt, wenn die weitere Photozelle 70 für eine bestimmte Dauer kein Lichtsignal einer bestimmtem Stärke empfängt.

Die Photozellen 68a und 68b sowie die weitere Photozelle 70 bilden eine Baueinheit auf einem gemeinsamen Träger 73.

Eine Leiterschleife umgibt das Drehteil 63 unmittelbar benachbart zu den Gasballons 60, 62 des Drehteils 63. Der Verlauf der Leiterschleife wird anhand der jeweils rechtwinklig abknickenden, die Gasballons 60, 62 benachbart umgebenden Abschnitte angenähert deutlich, wie sie in Figur 2 dargestellt sind. Zur Stromzuführung zur Leiterschleife dienen Stifte 74, 76, die die Halteplatte 48 und die Messkammerwand 22 durchragen und zur Leiterschleife führen.

Die Photozelle 68 wird so angeordnet, dass sich in Ruhelage beziehungsweise Nullstellung des Drehteils 63, also wenn auf dieses kein Drehmoment ausgeübt wird, der reflektierte Lichtstrahl genau in der Mitte zwischen den zwei Photozellen 68a, 68b befindet und damit auf die weitere Photozelle 70 fällt. Aus dieser Nullstellung heraus wird, wenn Sauerstoff in die Messkammer 22 gelangt, das Drehteil mit einem bestimmten Drehmoment ausgelenkt, das proportional zur Sauerstoffkonzentration des in die Messkammer 22 eingeleiteten Gases ist. Demzufolge bewegt sich der an dem Verbindungsteil 58 des Drehteils 63 befestigte Spiegel 56 mit und dies führt zu einer Auslenkung des vom Spiegel 56 reflektierten Lichtstrahls, der nunmehr nicht mehr auf die weitere Photozelle 70 in der Mitte zwischen den beiden Photozellen 68a, 68b auftritt, sondern etwas daneben, beispielsweise auf die Photozelle 68a. Diese sendet ein Steuersignal ab, mit dem die an der Kompensations-Leiterschleife anliegende Spannung und damit der durch die Leiterschleife führende Strom erhöht wird, wodurch eine Magnetfeldstärke erzeugt wird, die dem durch die Sauerstoffkonzentration erzeugten Drehmoment des Drehteils 63 entgegenwirkt. Die Spannung wird solange erhöht, bis die Photozelle 68a nicht mehr von dem reflektierten Lichtstrahl getroffen wird und der Lichtstrahl daher wieder zwischen den beiden Photozellen 68a, 68b auf die weitere Photozelle 70 auftrifft.

Die Kompensationsspannung an der Leiterschleife ist dann ein direktes Maß für die Sauerstoffkonzentration. Entsprechendes gilt für eine gegensinnige Auslenkung des Lichtstrahls, etwa von der Nulllage hin zur Photozelle 68b.

Die wie vorstehend beschriebene Messung der Sauerstoffkonzentration des in die Messkammer 22 eingeleiteten Gases findet bei Funktionstüchtigkeit der Sauerstoffmesszelle 10 statt. Die Dauer in der Einrichtung zur Erzeugung eines Fehlersignals, ab der ein Fehlersignal erzeugt wird, ist dabei derart bestimmt, dass diese Dauer größer ist als die Auslenkungsdauer des Drehteils 63, also die Dauer ab dem Zeitpunkt der Auslenkung des Drehteils aufgrund der Einleitung von Sauerstoff in die Messkammer 22 bis zum Zeitpunkt der Kompensation des hierdurch auf das Drehteil ausgeübten Drehmoments, so dass sich dieses wieder in der Nullstellung befindet.

Ein Fehlersignal wird von der Einrichtung zur Erzeugung eine Fehlersignals daher nicht ausgegeben, da die Photozelle 70 nach der Auslenkung des

Drehteils 63 aus der Nullstellung binnen der bestimmten, maximalen Dauer das Lichtsignal des reflektierten Lichtstrahles wieder empfangen hat.

Kommt es hingegen zu einer Fehlfunktion der Sauerstoffmesszelle 10, beispielsweise weil sich das Drehteil 63 nach seiner Auslenkung aus der Nullstellung verklemmt, kann das Drehteil 63 nicht in seine Nullstellung zurückgedreht werden. Nach Auslenkung des Drehteils 63 kann der vom Spiegel 56 reflektierte Lichtstrahl damit nicht mehr auf die weitere Photozelle 70 reflektiert werden. Überschreitet die Auslenkungsdauer des Drehteils 63 die in der Einrichtung zur Erzeugung des Fehlersignals bestimmte, maximale Dauer, erzeugte diese ein Fehlersignal, da sie innerhalb der bestimmten Dauer kein Lichtsignal des reflektierten Lichtstrahls empfangen hat.

Eine Fehlmessung kann hierdurch vermieden werden.

## Patentansprüche

1. Sauerstoffmesszelle mit folgenden Merkmalen:
a. einer Messkammer (22) mit einem Gaseinlass (28) und einem Gasauslass (30) für zu analysierendes Gas;
b. einem in der Messkammer (22) angeordneten hantelförmigen Drehteil (63) mit zwei stickstoffgefüllten Hohlkörpern (60, 62) und einem diese verbindenden Verbindungsteil (58), wobei
c. das Drehteil (63) um eine senkrecht zur Längsachse des Verbindungsteils (58) verlaufenden Achse drehbar angeordnet ist;
d. einem an dem Drehteil (63) angeordneten Spiegel (56);
e. einer Einrichtung zur Erzeugung eines ungleichförmigen Magnetfeldes im Bereich des Drehteils (63);
f. einem Lichtsender (66) zur Erzeugung eines Lichtstrahls (67) und dessen Sendung auf den Spiegel (56);
g. einem ersten Photosensor (68a, 68b), auf den der Lichtstrahl (67) über den Spiegel (56) reflektierbar ist, zur Einstellung der Nullstellung des Drehteils (63);
h. einem weiteren Photosensor (70), auf den der Lichtstrahl (67) über den Spiegel (56) reflektierbar ist, und der allein zur Überwachung der Funktionstüchtigkeit der Sauerstoffmesszelle (10) dient;
i. einer Einrichtung zur Erzeugung eines Fehlersignals in Abhängigkeit der von dem weiteren Photosensor (70) empfangenen Lichtsignale, durch welche eine Fehlfunktion der Sauerstoffmesszelle angezeigt wird und anhand derer die Funktionstüchtigkeit der Sauerstoffmesszelle überwachbar ist.

2. Sauerstoffmesszelle nach Anspruch 1 mit einer Einrichtung zur Erzeugung eines Fehlersignals in Abhängigkeit der von dem weiteren Photosensor (70) empfangenen Stärke der Lichtsignale.

3. Sauerstoffmesszelle nach Anspruch 1 mit einer Einrichtung zur Erzeugung eines Fehlersignals in Abhängigkeit der von dem weiteren Photosensor (70) empfangenen Stärke sowie der Dauer oder des Zeitpunkts der Lichtsignale.

4. Sauerstoffmesszelle nach Anspruch 1 mit einem weiteren Photosensor (70) in Form wenigstens einer Photozelle.

5. Sauerstoffmesszelle nach Anspruch 1, bei der der erste Photosensor (68a, 68b) und der weitere Photosensor (70) unmittelbar benachbart zueinander angeordnet sind.

6. Sauerstoffmesszelle nach Anspruch 1, bei der der weitere Photosensor (70) inmitten des ersten Photosensors (68a, 68b) angeordnet ist.

7. Sauerstoffmesszelle nach Anspruch 1 mit einem ersten Photosensor (68a, 68b) aus wenigstens zwei Einzelsensoren, die um den weiteren Photosensor (70) herum angeordnet sind.

8. Sauerstoffmesszelle nach Anspruch 1, bei der der erste Photosensor (68a, 68b) und der weitere Photosensor (70) eine Baueinheit bilden.

9. Sauerstoffmesszelle nach Anspruch 1, wobei das Drehteil (63) drehbar an einem um seine Längsachse tordierbaren Torsionsteil (54) angeordnet ist, wobei die Längsachse des Torsionsteils (54) senkrecht zur Längsachse des Verbindungsteils (58) verläuft und mittig zwischen den Hohlkörpern (60, 62) des Drehteils (63) mit dem Verbindungsteil (63) verbunden ist.

10. Verfahren zur Überwachung der Funktionstüchtigkeit einer Sauerstoffmesszelle nach Anspruch 1, bei dem die an dem weiteren Photosensor (70) empfangenen Lichtsignale zur Überwachung der Funktionstüchtigkeit der Sauerstoffmesszelle (10) überwacht werden.

11. Verfahren nach Anspruch 10, bei dem die an dem weiteren Photosensor (70) empfangenen Lichtsignale hinsichtlich Stärke und Dauer oder hinsichtlich Stärke und Zeitpunkt überwacht werden.

12. Verfahren nach Anspruch 10, bei dem in Abhängigkeit von Stärke und Dauer oder von Stärke und Zeitpunkt der an dem weiteren Photosensor (70) empfangenen Lichtsignale ein Fehlersignal erzeugt wird.

13. Verfahren nach Anspruch 10, bei dem ein Fehlersignal erzeugt wird, wenn der weitere Photosensor (70) für eine bestimmte Dauer oder zu einem bestimmten Zeitpunkt kein Lichtsignal einer bestimmten Stärke empfängt.

## Claims

1. An oxygen measurement cell comprising the following features:
a. a measuring chamber (22) comprising a gas inlet (28) and a gas outlet (30) for gas to be analysed;
b. a dumbbell-shaped rotary part (63) arranged in the measuring chamber (22) and comprising two nitrogen-filled hollow bodies (60, 62) and a connection part (58) connecting these, wherein
c. the rotary part (63) is arranged rotatably about an axis extending perpendicular to the longitudinal axis of the connection part (58);
d. a mirror (56) arranged on the rotary part (63);
e. a device for generating a non-uniform magnetic field in the region of the rotary part (63);
f. a light emitter (66) for generating a light beam (67) and transmitting said light beam onto the mirror (56);
g. a first photosensor (68a, 68b), onto which the light beam (67) can be reflected via the mirror (56), for adjusting the zero position of the rotary part (63);
h. a further photosensor (70), onto which the light beam (67) can be reflected via the mirror (56), and which serves merely to monitor the operability of the oxygen measurement cell (10);
i. a device for generating an error signal as a function of the light signals received by the further photosensor (70), via which device an error function of the oxygen measurement cell is displayed and, based on which, the operability of the oxygen measurement cell can be monitored.

2. The oxygen measurement cell according to claim 1, comprising a device for generating an error signal as a function of the strength of the light signals received by the further photosensor (70).

3. The oxygen measurement cell according to claim 1, comprising a device for generating an error signal as a function of the strength and duration or moment in time of the light signals received by the further photosensor (70).

4. The oxygen measurement cell according to claim 1, comprising a further photosensor (70) in the form of at least one photocell.

5. The oxygen measurement cell according to claim 1, wherein the first photosensor (68a, 68b) and the further photosensor (70) are arranged directly side by side.

6. The oxygen measurement cell according to claim 1, wherein the further photosensor (70) is arranged in the middle of the first photosensor (68a, 68b).

7. The oxygen measurement cell according to claim 1, comprising a first photosensor (68a, 68b) formed of at least two individual sensors which are arranged around the further photosensor (70).

8. The oxygen measurement cell according to claim 1, wherein the first photosensor (68a, 68b) and the further photosensor (70) form a module.

9. The oxygen measurement cell according to claim 1, wherein the rotary part (63) is arranged rotatably on a torsion part (54) which is twistable about its longitudinal axis, the longitudinal axis of the torsion part (54) extending perpendicular to the longitudinal axis of the connection part (58) and being connected to the connection part (63) centrally between the hollow bodies (60, 62) of the rotary part (63).

10. A method for monitoring the operability of an oxygen measurement cell according to claim 1, wherein the light signals received on the further photosensor (70) are monitored in order to monitor the operability of the oxygen measurement cell (10).

11. The method according to claim 10, wherein the light signals received on the further photosensor (70) are monitored in terms of strength and duration or in terms or strength and moment in time.

12. The method according to claim 10, wherein an error signal is generated as a function of the strength and duration or as a function of the strength and moment in time of the light signals received on the further photosensor (70).

13. The method according to claim 10, wherein an error signal is generated if the further photosensor (70) receives no signal of a specific strength for a specific duration or at a specific moment in time.

## Revendications

1. Cellule de mesure d'oxygène présentant les caractéristiques suivantes :
a. une chambre de mesure (22) avec une entrée de gaz (28) et une sortie de gaz (30) pour du gaz à analyser ;
b. une partie rotative (63) disposée dans la chambre de mesure (22) et en forme de haltère avec deux corps creux (60, 62) remplis d'azote et une partie de liaison (58) reliant ces corps creux,
c. la partie rotative (63) étant disposée de façon à pouvoir tourner autour d'un axe agencé perpendiculairement à l'axe longitudinal de la partie de liaison (58) ;
d. un miroir (56) disposé sur la partie rotative (63) ;
e. un dispositif pour générer un champ magnétique non uniforme dans la zone de la partie rotative (63) ;
f. un émetteur de lumière (66) pour générer un faisceau de lumière (67) et son envoi sur le miroir (56) ;
g. un premier photocapteur (68a, 68b), sur lequel le faisceau de lumière (67) peut réfléchir par l'intermédiaire du miroir (56), pour le réglage de la position zéro de la partie rotative (63) ;
h. un autre photocapteur (70), sur lequel le faisceau de lumière (67) peut réfléchir par l'intermédiaire du miroir (56), et qui sert uniquement à contrôler le bon fonctionnement de la cellule de mesure d'oxygène (10) ;
i. un appareil pour générer un signal d'erreur en fonction des signaux de lumière reçus de l'autre photocapteur (70), signaux par lesquels un dysfonctionnement de la cellule de mesure d'oxygène est affiché et à l'aide desquels le bon fonctionnement de la cellule de mesure d'oxygène peut être contrôlé.

2. Cellule de mesure d'oxygène selon la revendication 1 comprenant un appareil pour générer un signal d'erreur en fonction de l'intensité des signaux lumineux qui est reçue de l'autre photocapteur (70).

3. Cellule de mesure d'oxygène selon la revendication 1 comprenant un appareil pour générer un signal d'erreur en fonction de l'intensité reçue de l'autre photocapteur (70) et de la durée ou du moment des signaux de lumière.

4. Cellule de mesure d'oxygène selon la revendication 1 comprenant un autre photocapteur (70) sous la forme d'au moins une cellule photo.

5. Cellule de mesure d'oxygène selon la revendication 1, sur laquelle le premier photocapteur (68a, 68b) et l'autre photocapteur (70) sont disposés directement l'un à côté de l'autre.

6. Cellule de mesure d'oxygène selon la revendication 1, sur laquelle l'autre photocapteur (70) est disposé au centre du premier photocapteur (68a, 68b).

7. Cellule de mesure d'oxygène selon la revendication 1 comprenant un premier photocapteur (68a, 68b) constitué d'au moins deux capteurs individuels, qui sont disposés autour de l'autre photocapteur (70).

8. Cellule de mesure d'oxygène selon la revendication 1, sur laquelle le premier photocapteur (68a, 68b) et l'autre photocapteur (70) forment un module.

9. Cellule de mesure d'oxygène selon la revendication 1, la partie rotative (63) étant disposée de façon rotative sur une partie de torsion (54) pouvant se tordre autour de son axe longitudinal, l'axe longitudinal de la partie de torsion (54) étant agencé perpendiculairement à l'axe longitudinal de la partie de liaison (58) et étant relié à la partie de liaison (63) au centre entre les corps creux (60, 62) de la partie rotative (63).

10. Procédé pour contrôler le bon fonctionnement d'une cellule de mesure d'oxygène selon la revendication 1, dans lequel les signaux lumineux reçus sur l'autre photocapteur (70) sont contrôlés pour contrôler le bon fonctionnement de la cellule de mesure d'oxygène (10).

11. Procédé selon la revendication 10, dans lequel les signaux lumineux reçus de l'autre photocapteur (70) sont contrôlés en ce qui concerne l'intensité et la durée ou en ce qui concerne l'intensité et le moment.

12. Procédé selon la revendication 10, dans lequel un signal d'erreur est généré en fonction de l'intensité et de la durée ou de l'intensité et du moment des signaux lumineux reçus sur l'autre photocapteur (70).

13. Procédé selon la revendication 10, dans lequel un signal d'erreur est généré lorsque l'autre photocapteur (70) ne reçoit pas de signal de lumière d'une certaine intensité pour une durée définie ou à un moment défini.
